Europäisches Patentamt

European Patent Office

Office européen des brevets

(11) Publication number: **0 162 659**

**A2**

(12) **EUROPEAN PATENT APPLICATION**

(21) Application number: **85303402.3**

(22) Date of filing: **15.05.85**

(51) Int. Cl.⁴: **F 16 L 47/02**
**F 16 L 55/00**

(30) Priority: **18.05.84 ZA 843755**
**23.04.85 ZA 853003**

(43) Date of publication of application:
**27.11.85 Bulletin 85/48**

(84) Designated Contracting States:
**AT BE CH DE FR GB IT LI LU NL SE**

(71) Applicant: **MEGA PLASTIC INDUSTRIES**
**(PROPRIETARY) LIMITED**
**Spanner Road**
**Clayville Transvaal Province(ZA)**

(72) Inventor: **Jones, Barry Michael**
**814 Richmond Street**
**Wingate Park Pretoria Transvaal(ZA)**

(74) Representative: **Eurolink**
**Regent House Heaton Lane**
**Stockport Cheshire, SK4 1BS(GB)**

(54) Thermoplastic pipe joints.

(57) A pipe joint for thermoplastic pipes for high pressure service, for example, approaching or exceeding 10 bar, and in particular for polyolefins which are not susceptible to adhesive or solvent bonding, which comprises a standardised victaulic shoulder in polymeric material which has been modified by the incorporation of organic or inorganic particulate additives in concentrations of between 10% and 60% by a weight based on polymeric material which is similar to that of the pipe material and which, despite modification, may still be fusion welded to the pipe material. A ring formed of colour impregnated polymer is located around the joint, located between a secondary step and a butt welding bead to provide an economical means of protection of the victaulic type HDPE pipe ends with a permanent colour coding.

FIG. 1

## THERMOPLASTIC PIPE JOINTS

This invention relates to jointing systems for thermoplastic pipes and related pipe fittings such as bends, T joints and Y joints, reducers and the like.

Non metallic pipe work is widely used but the provision of disconnectable joints which have the strength, reliability, ease of connection and disconnection and cost effectiveness of steel pipe joints remains difficult in the case of a number of classes of polymers. Thus, for example, although victaulic jointing systems have been used successfully with ABS (acrylonitrilebutadiene styrene) pipes, since ABS has a sufficiently high modulus of elasticity of around 2500 N/mm$^2$, the chemical properties of this polymer are not suitable for all applications. Also the high cost of ABS is an important factor.

Thus, for example, a jointing system for UPVC (unplasticised polyvinyl chloride) pipes has been described in South African patent No. 82/3703. This patent describes a steel sleeve which is partially embedded in a UPVC collar which is bonded to the pipe end by means of solvents or adhesives and which sleeve provides a sufficiently rigid shoulder or radial limb for a victaulic type joint. The victaulic type joint is well proven and is popular in mining practice for reasons which are dealt with in the patent.

However, piping systems often require polymers which exhibit superior qualities such, for example, as impact strength, abrasion resistance and chemical inertness. Such superior qualities are often presented by polymers in the polyolefin family, of which HDPE (high density polyethylene) is a prime example, other examples being PP (polypropylene) and PB (polybutylene). However, polyolefin materials such as HDPE also have an insufficiently high long term modulus of elasticity at temperatures common in mining practice for application in pressure systems, for example, ten bar, for periods of many years. Such polymers, like UPVC, need reinforcement for the manufacture of effective victaulic jointing systems but, unlike UPVC, cannot be solvent or adhesive bonded. The steel reinforced victaulic type joint described in the patent can therefore not be applied to solve the problem inherent in polyolefin materials.

A jointing system for thermoplastic pipes in accordance with this invention comprises the provision of a jointing formation in a polymeric material similar to that of the pipe material, which polymeric material has been modified by the incorporation of organic or inorganic particulate additives in concentrations of between 10% and 60% by weight based on polymeric material and fusion welding the modified polymeric material to the pipe material.

A "similar" polymeric material to that of the pipe material will be one which, in modified form, can be fusion welded to the pipe material. In general, it may be said that the modified polymer will be of the same generic type as the unmodified polymer of the pipe. Thus, for example, a modified medium density polyethylene may be welded to a HDPE pipe, a modified PP jointing formation may be welded to a PP pipe without distinction as to whether one is a homopolymer and the other a copolymer, a modified PB may be welded to a polybutylene pipe. For high pressure work low density polyethylene will not usually come into consideration due to its limited mechanical properties.

Very often, pipes are subjected to rough handling and jointing systems such as herein described could be damaged because of the pipes being pulled or transported from one place to another. Such damage could be caused both by lateral and longitudinal movement of the pipe relative to the ground or other surfaces which may damage especially the flanges or shoulders used for jointing and sealing one pipe to another.

In another context, it is desirable to be able to distinguish reticulation systems which are being used for different services or utilities. Thus, for example, in chemical plants and in mining applications, it is desirable to distinguish between pipes forming part of distribution systems for air, water, chemicals, gas, etc. If such different reticulation systems are clearly marked so as to differentiate between the different services, utilities or even process lines, improved operation efficiency and increased safety are greatly facilitated. Furthermore, it may be desirable to distinctively mark different pipes with different pressure ratings so that one could be clearly distinguished from the other, thereby further improving safety of application.

With the increasing use of plastics as materials for the manufacture of pipes especially for application under corrosive conditions, and because of the non-availability of price competitive paints suitable for the permanent painting of some polyolefins like high density polyethylene (HDPE), colour coding has presented a problem. However, plastics forming processes lend themselves to the incorporation of pigments, so that this problem could be overcome to some extent, especially for indoor use. Unfortunately, most polymers are vulnerable to attack by ultraviolet radiation which, in the case of HDPE, is, for long periods of up to 50 years, countered by the incorporation of carbon black in the polymer. As a consequence, polyolefin pipes which may be subjected to ultraviolet radiation at some or other stage, even though ultimately they may be used underground in mines where there is no ultraviolet radiation, generally have to be black and hence present problems with regard to colour coding.

According to the present invention, there is provided a pipe accessory suitable for use with thermoplastic pipe jointing systems, comprising a ring locatable around the periphery of the pipe or the jointing means, the ring being adapted to protect the jointing means against at least some damage, and the ring is distinctively marked, e.g. colour coded.

In one embodiment of the invention, the outside diameter of the ring is equal to or larger than the outside diameter of the jointing means.

Conveniently, the jointing means may be a shoulder type jointing system, for example, victaulic, the joint having a shoulder adapted to be connected to a shoulder of a similar part of a victualic type jointing system of another pipe to be joined thereto.

The ring preferably comprises a pigment imparting a distinctive colour thereto. Conveniently, the pigment is dispersed throughout the ring. This economically allows the use of more expensive luminescent and light reflective pigments, if desired.

According to one aspect of the invention, the pipe is pressure rated and the pigment is selected to comply with a pressure code in accordance with the pressure rating of the pipe.

Alternatively or additionally, the pigment may be selected so as to indicate what flow medium or media the pipe is suitable for.

Thus in its preferred scope the invention provides an economical means of protection of the joint shoulder with permanent or semi permanent colour coding.

The ring may be made of any material at all. A preferred material is thermoplastic polyolefinic plastics material. In one embodiment of the invention, the ring is made of high density polyethylene (HDPE).

The ring may be adapted to contribute to the strength of the pipe or jointing means. This, for example, may be achieved by fitting the ring with an interference fit or by interface fusion welding the ring, for example, socket fushion welding.

In the event that it is desired that the ring should be paintable, it may be made of e.g. acrylonitrile butadiene styrene (ABS) or UPVC. Rings made of ABS may thus be painted different colours so as to correspond to the pressure rating of the pipe to which the jointing system is connected or to be connected, or alternatively or additionally, the flow medium or media the pipe is suitable for.

In regard to the jointing system, the welding step may be carried out byuse of electro-fusion welding, which is advantageous for employment by unskilled personnel in difficult conditions (for example, mining), or by socket fusion welding, spin welding or butt welding.

The additives must be of a nature which increase the long term modulus of elasticity of the material, for example, lenticular and filamentary additive particles. More specific examples thus are talcum or glass fibres. The additives will in general also, and may preferably be selected to, improve also properties such as impact strength, creep rupture strength and others. The additives thus are generally two dimensional or one dimensional particles and, for example, their characteristics and concentration can conveniently be controlled to obtain a desirable modulus of elasticity of the modified product, of a magnitude selected for the application, for example, in the context of a victaulic shoulder of not less than an order of magnitude of $2000N/mm^2$. By way of comparison figures for the modulus of elasticity of various unmodified polymers are :-

HDPE : 800 - 1200 $N/mm^2$

PP : 1000 - 1300 $N/mm^2$

Thorough mixing of the additive with the base polymer is important to obtain uniformity of properties although some directionality of properties is a possibility which need not be excluded in a suitable application. Special attention must be paid to the mixing to achieve this end without degradation of the polymer or indeed alteration of the additive particles.

In suitable cases it will be preferred to employ coupling agents for improvement of the bond between the additive particles and the base polymer, for example, Titanate and Silane compounds.

Since, for example, in mining applications where safety considerations are paramount, victaulic type couplings are preferred, an exemplary jointing formation will in fact be a victaulic type shoulder of standardised dimensions to enable using standard victaulic clamps and even jointing of plastic pipes to existing victaulic metal pipes.

In this application, for example, the best method in accordance with this invention was carried out with an HDPE modified by a 30% weight of polymer glass fibre additive. The fibres were in a length range within 0,2 mm to 6 mm of which a preference has been given to 2 - 4 mm, which results in the desired modulus improvement including a safety factor for said pressure applications. The thickness of the fibres was of the order of magnitude of 13 microns.

Thus the present invention provides means for jointing of thermoplastic pipes which comprises a jointing formation in a polymeric material similar to that of the pipe material for which it is intended, which polymeric material has been modified by the incorporation of organic and inorganic particulate additives in concentrations of between 10% and 60% by weight based on polymeric material, and adapted for fusion welding to an end of the pipe.

In a preferred embodiment (for example, for mining applications) the jointing formation has electric heating elements incorporated in it for electro-thermal fusion welding

A preferred range within which the particulate additive is confined is not less than 20% and not more than 40% by weight based on polymeric material. The best method example cited above and other tests have demonstrated that, surprisingly, such a modified polymeric material can nevertheless be fusion welded to a similar unmodified polymer. The modified polymeric material is upgraded to exhibit the properties of engineering plastics and hence attain the order of mechanical properties which are inherently necessary for a jointing system such, for example, as a victaulic system. In particular it becomes important to upgrade the flexural creep modulus in such applications and tests have indicated that increases of up to 5 times the unmodified properties may be obtained in suitable formulations.

The invention will now be more fully described by way of examples, with reference to the accompanying drawings, in which:

Figure 1 shows a pipe end with a butt welded jointing formation in modified polymeric material in cross section,

Figure 2 shows a pipe end with a spigot-and-socket welded jointing formation in modified polymer in cross section,

Figure 3 shows a pipe end with a sleeve welded jointing formation in modified polymer in cross section, and

Figure 4 shows a pipe end with a butt welded jointing formation in modified polymer and a colour coded, protective ring, in cross section.

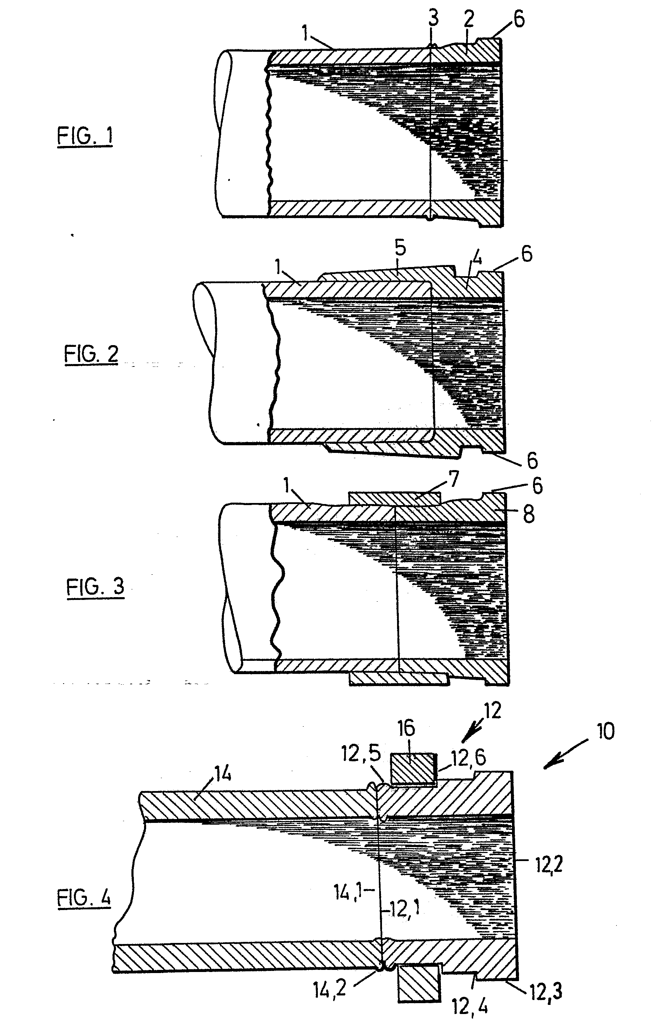

As shown in figure 1 a HDPE pipe 1 has a victaulic shoulder jointing formation 2 butt welded or friction fusion welded at the joint 3. The jointing formation 2 is of modified HDPE comprising a 30% by weight based on polymer addition of glass fibres in the range 0,2 to 6 mm long.

Figure 2 shows a similar victaulic jointing formation, however, in thiscase electro-fusion welded to the end of the pipe 1. Thus in this case the victaulic jointing formation of modified polymeric material 4 has a socket extension 5 into which the spigot end of the pipe 1 is fitted. Embedded in the socket extension 5 and adjacent its inner surfaces are electric heating elements adapted for electro-thermal fusion welding which elements are, however, not shown in the drawings. This sytem also lends itself to joining by means of the socket fusion technique.

Figure 3 shows yet another possible variation, which is to use a standard electro-fusion socket or sleeve coupler 7 to join the shouldered end 8 to the pipe 1 as shown.

The victaulic shoulder 6, in each case, constitutes the functionally essential component of the victaulic type jointing formation, 2 in the case of figure 1, 4 & 5 in the case of figure 2 and 8 in the case of figure 3. Thus it is understood that the jointing formation which may vary in its functionally essential components from joint type to joint type will in general be embodied in the form of a socket or spigot or butt weldable stub.

In figure 4, reference numeral 10 generally indicates a pipe jointing means.

The means 10 comprises a cylindrical formation 12, one end 12.1 of which is connected to an end 14.1 of a pipe 14. The other end 12.2 of the formation 12 is provided with a shoulder 12.3 having a bearing surface 12.4.

The formation 12 is of modified high density polyethylene (HDPE) comprising a 30% by weight based on the polymer, of a glass fibre additive in the range of 0,2 to 6 mm long.

The pipe 14 is made of unmodified HDPE. The pipe 14 and the formation 12 are butt-welded to each other by means of friction fusion welding.

A ·ring 16, also made of HDPE, is provided around the formation 12 intermediate its ends. The ring 16 comprises a pigment imparting a distinctive colour to it, the colour being selected according to a code indicating what service the pipe is suitable for. Alternatively, the colour could be selected so as to comply with a pressure code, in accordance with the pressure rating of the pipe 14.

As is shown in the drawing, the outside diameter of the ring 16 is greater than the outside diameter of the shoulder 12.3, whereby the ring 16 may protect the shoulder 12.3 against against damage caused by both longitudinal and lateral movement of the formation.

The ring 16 may alternatively be made of a material such as ABS which is suitable for applications where it may be desired to paint the ring 16 in a distinctive colour, depending on the particular application or for which its pressure rating may be suitable. Thus, for example, it may enhance the flexibility of application of the pipe 14 and jointing means.

When it is desired to attach a formation 12 to one end of the pipe 14, a ring 16 may be slid over the formation 12 and the formation 12 connected to the pipe 14 by means of fusion welding. In this way, beads 12.5, 14.2 are formed at the ends 12.1, 14.1 respectively of the formation 12 and the pipe 14. The bead 12.5 and the flange 12.3 act as stops preventing the ring 16 from sliding away from formation 12 onto the pipe 14.

The formation 12 may be made by means of injection moulding while the pipe 14 may be manufactured by means of extrusion.

The jointing formations shown in the drawings conform to standard victaulic specifications and may be joined by means of a standard victaulic clamp designed so as to allow some expansion movement between the shoulders and retaining them in a connected position with a seal bridging the shoulders and sealing on the circumferential surfaces 6 or 12.3.

The melt index of the polymer, for example, as specified in the German standard specification DIN 53 735, may be used as a convenient measure of the mean molecular weight since it bears a consistent relationship thereto. For example, a high density polyethylene will conform to a melt index range of between 1,0 and 15 grams/10 minutes preferably or at least not outside the range 0,05 to 60 grams/10 minutes.

As already commented the additive for the jointing formation must be finely distributed throughout the polymer phase to provide an engineering polymer of suitably upgraded mechanical characteristics which may nevertheless still be fusion welded (heat bonded) to a pipe of the unmodified base polymer in order to meet the demands of the application such as high pressure service over long periods, for example, of up to 50 years. High pressure applications indicate pressures approaching or exceeding 10 bars.

Glass fibre of a length 0,2 mm to 15 mm may be used; the range 12 to 15 is found useful in some applications, but usually a preferred range is from 1 mm to 6 mm, for example 4 mm.

In a particular application in underground mines in South Africa, HDPE pipes are used for air and water reticulation, the pipes being suitably designed for operating pressures of up to 20 bar and ambient temperatures of up to 40 C.

## CLAIMS

1. Means for jointing thermoplastic pipes which comprises a jointing formation in a polymeric material similar to that of the pipe material, the jointing formation adapted for fusion welding to the pipe, in which the polymeric materialof the jointing formation has been modified by the incorporation of organic or inorganic particulate additives in concentrations of between 10% and 60% by weight based on polymeric material.

2. A means as claimed in claim 1, in which the concentration of particulate additives lies within the range 20% to 40% by weight based on polymeric material and the additives are of lenticular or filamentary form.

3. A means as claimed in either one of claims 1 or 2, in which the similar polymeric material is of the same generic type as the material of the pipe.

4. A means as claimed in any one of claims 1 to 3, in which the additives are filamentary in the length range lying between 0,2 mm and 15 mm long.

5. A means as claimed in any one of claims 1 to 4, in which the concentration and characteristics of the additives are selected to provide a modulus of elasticity of the modified polymer of not less than 2000 N/mm$^2$.

6.    A means as claimed in any one of claims 1 to 5, in which the jointing formation is a victaulic type shoulder conforming to standardised dimensions.

7.            A means   as claimed in any one of the preceding claims in which the polymeric materialis a polyolefin.

8.    A means as claimed in any one preceding claim, which comprises a ring locatable around the periphery of the pipe or the jointing formation, the ring being adapted to protect the jointing formation against at least some damage and the ring is distinctively marked.

9.  A means as claimed in any one of the preceding claims, in which the ring comprises a pigment imparting a distinctive colour thereto.

10.    Means for use in jointing thermoplastic pipes substantially as herein described and as illustrated in the accompanying drawings.

0162659

FIG. 1

FIG. 2

FIG. 3

FIG. 4